## Europäisches Patentamt
## European Patent Office
## Office européen des brevets

(19)

(11) Veröffentlichungsnummer: **0 266 737**
**A2**

(12) # EUROPÄISCHE PATENTANMELDUNG

(21) Anmeldenummer: **87116151.9**

(22) Anmeldetag: **03.11.87**

(51) Int. Cl.4: **C05F 11/00**

(30) Priorität: **05.11.86 AT 2945/86**

(43) Veröffentlichungstag der Anmeldung:
**11.05.88 Patentblatt 88/19**

(84) Benannte Vertragsstaaten:
**AT BE CH DE ES FR GB GR IT LI LU NL**

(71) Anmelder: **BIOCHEMIE Gesellschaft m.b.H.**

**A-6250 Kundl Tirol(AT)**

(72) Erfinder: **Naschberger, Stefan**

**A-6311 Oberau 339(AT)**

(74) Vertreter: **Norris, Allen Edwin et al**
**SANDOZ AG Patentabteilung Lichtstrasse 35**
**CH-4002 Basel(CH)**

(54) **Verfahren zur Düngung von Weinkulturen.**

(57) Die Erfindung betrifft ein Verfahren zur Düngung von Weinkulturen durch Anwendung eines Düngers aus Pilzbiomasse.

EP 0 266 737 A2

## Verfahren zur Düngung von Weinkulturen

Die Erfindung betrifft ein Verfahren zur Düngung von Weinkulturen durch Anwendung eines Düngers aus Pilzbiomasse. Dieses Verfahren ist auch auf Problemböden anwendbar, ergibt ausgezeichnete Erträge bei hoher Qualität und verringert außerdem die Chlorosehäufigkeit.

Rebkulturen stehen vielfach auf Problemstandorten, die richtige Düngung ist daher oft problematisch. Nährstoffmangelerscheinungen oder Überdüngungseffekte sind häufig zu beobachten. Besonders Böden mit hohen pH-Werten, verdichtetem oder verkrustetem Untergrund sind empfindlich. Solche Standorte könne vorübergehend sogar unter Überfeuchtung leiden, sodaß bei reichlicher Stickstoffversorgung das Pflanzengift Ammoniak gebildet werden kann. In solchen Böden werden außerdem die Nährionen zurückgestaut und diese Überkonzentrationen führen in der weiteren Folge zu Verätzungen der Wurzeln. Auf einigen Standorten treten trotz eines hohen Schotteranteils Verschlämmungen im obersten Bodenhorizont durch gallertige Kieselsäure auf. Auch hier finden sich dann vielfach ähnliche Probleme wie oben angeführt. Ein Stickstoffüberschuß in der Bodenlösung findet sich nach Mineraldüngung häufiger als nach Verwendung geeigneter organischer Dünger. Vereinzelt gibt es auch Probleme nach hohen Stalldüngergaben; da ein Teil des Stickstoffs in wasserlöslicher Form vorliegt, können die Ursachen die gleichen sein. Es wird somit offensichtlich, daß von der Weinrebe höchste Anforderungen an einen Dünger gestellt werden. Organische Dünger, die den Stickstoff ausschließlich in gebundener Form enthalten, entsprechen am ehesten dieser Anforderung. Für eine günstige Wirkung darf die Mineralisation nich zu langsam ablaufen, um eine ausreichende Wirkung in der Anfangsphase der Vegetation zu gewährleisten. Ein C/N-Verhältnis unter 10 sowie eine leichte Abbaubarkeit der C-Verbindungen ist dafür erforderlich (der Ausdrück C/N-Verhältnis bezieht sich auf das Gewichtsverhältnis von organisch gebundenem Kohlenstoff zu Stickstoff). Nur dadurch wird auch eine gewünschte Stimulation der Mikroorganismen und Kleinsttierchen des Bodens erreicht. Die hygienische Unbedenklichkeit und das Fehlen von Schwermetallen sowie anderer Schadstoffe sind eine weitere Voraus setzung für einen Weinbaudünger.

Die Düngung im Weinbau ist ganz generell eine schwierige Aufgabe. Einerseits ist der Nähstoffentzug über die Trauben mit 8 kg N/100 Hl extrem niedrig, andererseits benötigt die Rebe im Frühjahr für einen kräftigen Austrieb einen ausreichenden N-Gehalt in der Bodenlösung.

Getrocknetes Pilzmycel, d.h. Pilzbiomasse, die bei der Trocknung von Pilzmycel z.B. des Penicillinproduktionsstammes Penicillium chrysogenum anfällt, wurde über Jahrzehnte als Futterzusatz verwendet. Dabei zeigt sich zwar eine brauchbare Futtereignung, besondere den Konkurrenzprodukten (Eiweissfuttermittel) überlegene Eigenschaften wurden jedoch nicht festgestellt. Pilzmycel weist z.B. folgende Zusammensetzung auf:

Trockensubstanz 95%
organische Substanz mind. 70 %
Stickstoff org. gebunden 5,5 %
$P_2O_5$ 1,5 %
$K_2O$ 3,5 %
CaO 5,0 %
MgO 1,5 %
Spurenelemente und Vitamine

Diese Analyse ist typisch für ein Produkt, welches mit Kali und Magnesium ergänzt wurde. Die entsprechenden $K_2O$ und MgO werte im nativen Produkt liegen bei 1,2 % und bei 0,25 %. Insgesamt unterliegen die Analysenwerte den bei organischen Düngern üblichen Schwankungen. Diese Pilzbiomasse, bestehend aus Mycel von Penicilliumarten, ergänzt mit Kalimagnesia, hat sich auf Problemböden bereits bestens bewährt. Durch regelmäßige Anwendung eines solchen Düngers nach dem in der AT-PS 381.927 geschützten Verfahren, ist eine dauerhafte Wiederbegrünung, z.B. von Hochlagenschipisten, möglich.

Durch Förderung der Mikroorganismentätigkeit werden gleichzeitig die Humusneubildung und die physikalischen Bodeneigenschaften verbessert, erst sekundär wird durch die Mineralisation auch der Stickstoff freigesetzt. Die Stickstoffwirkung ist weitgehend synchron geschaltet mit dem Bedarf der Pflanzen. Ein vorübergehender Stickstoffüberschuß, wie er bei den üblichen wasserlöslichen Mineraldüngern auftritt, ist nicht zu befürchten. Damit ist aber bereits eine der Ursachen für erhöhte Chloroseanfälligkeit ausgeschaltet. Fallweise wird sogar durch Verwendung des Pilzbiomasse-Düngers vorübergehend bodenbürtiger Stickstoff durch die Mikroorganismen gebunden.

Es wurde jetzt gefunden, dass Pilzbiomasse, beispielsweise Pilzmycel von Penicillium chrysogenum, sich besonders gut zur Düngung von Weinkulturen eignet. Die Erfindung betrifft demnach ein Verfahren zur Düngung von Weinkulturen, wobei man einen Dünger aus Pilzbiomasse, beispielsweise Pilzmycel von Penicillium chrysogenum, verwendet. Zwecks Erhöhung der K$_2$0 und Mg0 Werte kann eine beschränkte Menge eines Mineraldüngers, zweckmässig ein Kalimagnesia-Dünger (z.B. schwelfelsäuer Kalimagnesia-Dünger) zugegeben werden. Ein solches angereichertes Produkt enthält, zwecks Anwendung im erfindungsgemässen Verfahren von 85 bis 95, beispielsweise 90 Gewichts % an getrocknetem Pilzmycel und von 5 bis 15 beispielsweise 10 Gewichts % an Kalimagnesia-Dünger.

Die Aufwandmenge ist von verschiedenen Faktoren, beispielsweise der Bodenqualität abhängig. Im allgemeinen werden aber befriedigende Ergebnisse mit Aufwandmengen von 300 kg bis 1000 kg des gegebenenfalls angereichertem Dünger pro Hektar und Jahr erzielt.

Durch folgende Tests wurden die analytischen Kriterien bestimmt, die für einen für den Weinbau geeigneten Dünger notwendig sind (die Abkürzungen TS and Ges. stehen für resp. Trockensubstanz und Gesamtgehalt):

Mikrobiologische Untersuchungen:Gesamtkeimzahl     22.500/g davon 1000 Bazillen
Salmonellen     in 5 x 20 g nicht nachweisbar
Sulfitreduzierende Clostridien     unter 1000/g

Die Ergebnisse der mikrobiologischen Untersuchungen ergaben keine Hinweise für eine hygienische Bedenklichkeit.

## Penicillinbestimmung mittels Agrardiffusionstest:

| | |
|---|---|
| Testorganismus: | Bacillus stearothermophilus |
| Nachweisgrenze: | 0,02 µg/g |
| Ergebnis: | Penicillinaseempfindliches Penicillin ist nicht nachweisbar. |

Schwermetallgehalte:Ni mg/kg TS     10
Cr mg/kg TS     7,3
Pb mg/kg TS     13
Cd mg/kg TS     0,2
Hg mg/kg TS     0,011

Wertbestimmende BestandteileWassergehalt %     4,4
org. Substanz % i.d.TS     79,6
N(Kjeldahl) % i.d.TS     6,23

Säurelöslich: P$_2$O$_5$ % TS     1,8
K$_2$O % TS     4,4
Mg % TS     1,2
Ca % TS     3,7
Fe mg/kg TS     420
Mn mg/kg TS     26
Cu mg/kg TS     17
Zn mg/kg TS     61
Co mg/kg TS     5,7
B-Ges. mg/kg TS     8,4
Mo mg/kg TS     0,63

Pflanzenverträglichkeit:

Ein mit Gartenkresse durchgeführter Pflanzenverträglichkeitstest zeigt, daß ein Pilzbiomasse-Dünger bis zu einer Menge von 1% zu einem Substrat (Standardmischung) zugemischt, keine Pflanzenschädigung hervorruft. Das C/N-Verhältnis liegt bei ca. 7,5.

Diese Analysenergebnisse belegen die ökologische Unbendenklichkeit und den hohen Gehalt an wertbestimmenden Bestandteilen, Von den Ergebnissen des Pflanzenverträglichkeitstestes ist zu schießen, daß eine Überdüngung nahezu unmöglich ist. Nach analytischen Kriterien besitzt der Dünger die erforderlichen Voraussetzungen für den Weinbau.

Darüberhinaus ist aber noch die Wirkung auf die Qualität der Trauben und des Weines von Bedeutung. Während Quantitätssteigerungen vielfach eine Frage des Stickstoffangebotes sind, verlangt eine spürbare Anhebung der Qualität mit mineralischen Düngern genaue Kenntnisse der biologischen, chemischen und physikalischen Bodeneigenschaften. Ein Aufteilung der Düngermenge auf mehrere Teilgaben wäre erforderlich. Neben einer pflan zengerechten Darbietung der Kernnährstoffe ist besonders eine ausgewogene Spurenelementversorgung eine schwierige Aufgabe.

In einem Dünger auf Basis Pilzbiomasse werden die Makroelemente, insbesondere der Stickstoff, durch die pflanzengerechte Freisetzung optimal angeboten, eine Aufteilung der Düngergaben ist nicht erfonderlich. Die Mikronährstoffe sind zumindest in Minimalmengen enthalten, auf Böden mit Normalgehalten sind daher Spurenelementmängel nicht zu erwarten. Bekanntlich sind verschiedene Bodenmikroorganismen in der Lage, zusätzlich Spurennährstoffe zu aktivieren, sodaß ein Dünger, der das Bodenleben fördert, auch über diesen Umweg eine Verbesserung der Nähstoffversorgung bewirkt. Ein Pilzbiomasse-Dünger ist daher einfacher in der Handhabung, die Gefahr eines Düngungsfehlers wird deutlich verringert. Dadurch, daß die gesamte Aufwandsmenge als einmalige Gabe verabreicht werden kann, ergeben sich noch arbeitstechnische Vorteile.

Im folgenden Beispiel wird der vorteilhafte Effekt der Düngung mit Pilzbiomasse gezeigt.

Beispiel

Versuch im Weinbaugebiet Tattendorf, Schotterboden mit ausgeprägten Kalkkrusten und "Letten"-Lagen in tieferen Horizonten, pH-Wert 7,8 bis 8,4. Rebsorte Blauer Portugieser.

## Qualitäts- und Quantitätsdaten
### (Stockzustand, Traubenertrag, Mostqualität)

| | Null-Parzelle | | | M.Dü* | Biosol® | | |
|---|---|---|---|---|---|---|---|
| | 1985 23.9. | 1985 5.10. | 1986 15.9. | 1986 15.9. | 1985 23.9. | 1985 5.10. | 1986 15.9. |
| Öchslergrad | — | 80,0 | 76 | 75,5 | - | 95,0 | 88 |
| KMW° ** | 16,0 | 16,3 | 15,6 | 15,5 | 17,0 | 19,1 | 17,9 |
| Gesamt-Zucker (g/l) | 168 | 190,1 | 182 | 174,6 | 194 | 211,2 | 213 |
| Titrierbare Säure | 151 | 140 | - | - | 133 | 123,5 | - |
| Weinsäure (g/l) | 11,3 | 10,5 | 8,3 | 9,5 | 10,0 | 9,3 | 7,4 |
| pH | 3,1 | 3,0 | 3,0 | 3,0 | 3,1 | 3,1 | 3,2 |
| N ges (g/l) | 0,71 | 0,98 | 0,39 | 0,33 | 0,89 | 1,04 | 0,48 |
| Ertrag (kg/Stock) | - | 2,72 | 3,0 | 3,40 | - | 3,37 | 4,10 |
| Chlorose (%) | - | 10,0 | 10,6 | 11,8 | - | 12 | 6,1 |

\* M.Dü = Mineraldünger

\*\* KMW\* = Klosterneuburger Mostwaagengrad, ein Parameter für den Zuckergehalt

Anmerkung zu Aufwandmenge

Biosol® (kg/ha):　　1985: 800 (48 N, 12 $P_2O_5$, 28 $K_2O$)
1986: 600 (36 N, 9 $P_2O_5$, 21 $K_2O$)
1987: 500 (30 N, 7,5 $P_2O_5$, 17,5 $K_2O$)

Mineraldünger (kg/ha)　1986: 450 NAC (117 N), 100 Triplephosphat (45 $P_2O_5$), 300 Patentkali (110 $K_2O$).
Die Düngermengen wurden als einmalige Gabe im zeitigen Frühjahr ausgebracht.

Die Namen NAC, Triplephosphat und Patentkali sind Wortmarken für 3 verschiedene Dünger.

Herstellung von Biosol®:

Biosol ® ist ein Nebenprodukt aus der Penicillinfermentation. Die üblichen Fermentationsrohstoffe wie Sojamehl, Saccharose, Lactose, Spurenelemen te und Vitamine werden in Wasser angerührt, sterilisiert und mit dem Pilzstamm Penicillium chrysogenum beimpft. Im Laufe der Fermentation werden die Nährstoffe in Pilzbiomasse umgewandelt. Zum Zeitpunkt der Ernte wird die feuchte Pilzbiomasse von der flüssigen, penicillinhaltigen Phase durch Filtration abgetrennt und bei 130 bis 150°C und einer Verweildauer von 4 bis 6 Stunden getrocknet. Die getrocknete Pilzbiomasse wird noch mit 10% Kali-Magnesia (Patentkali) ergänzt und nach Granulierung als fertiger Dünger abgesackt.

Zusammensetzung:

Biosol® weist folgende wertbestimmende Bestandteile auf:

Wassergehalt %  4,4
org. Substanz % i.d.TS  79,6
N (Kjeldahl) % i.d. TS  6,23
$P_2O_5$ % TS  1,8
$K_2O$ % TS  4,4
Mg % TS  1,2
Ca % TS  3,7
Fe mg/kg TS  420,-
Mn mg/kg TS  26,-
Cu mg/kg TS  17,-
Zn mg/kg TS  61,-
Co mg/kg TS  5,7
B-Ges. mg/kg TS  8,4
Mo mg/kg TS  0,63

Der Pflanzenverträglichkeitstest zeigt, daß Biosol ®, bis zu einer Menge von 1 % zu einem Pflanzsubstrat zugemischt, keine Pflanzenschädigungen hervorruft.

Die Ergebnisse sind in mehrfacher Hinsicht überraschend. Beachtlich ist die Steigerung der Quantität und Qualität durch den Pilzbiomasse-Dünger. Der Massenertrag des Blauen Portugiesers übertraf bereits im ersten Jahr die ungedüngte Kontrollparzelle um 23 %. Auch die Qualität wurde merkbar angehoben, die Klosterneuburger Mostwerte lagen zum Probe-und Haupterntetermin (25.9., 5.10.) um 6 % bzw. 7 % über den Werten der Kontrollparzelle, der Gesamtzuckergehalt um 16 % bzw. 11%

Die Probenernte 1986 (15.9.1986) bestätigte das Vorjahr, die KMW[0] konnten um 15 %, der Zuckergehalt um 17 % und der Traubenertrag sogar um 37 % verbessert werden. Der Pilzbiomasse-Dünger brachte demnach beides, sowohl erhebliche Qualitätssteigerungen, als auch erhebliche Quantitätssteigerungen.

Durch den Mineraldünger wurde zwar der Massenertrag gegenüber der Nullparzelle um 13 % erhöht, die Steigerung erreichte aber nur ein Drittel des Anstieges wie nach Düngung mit dem Pilziomasse-Dünger. Auf die Qualität wirkte sich die Mineraldüngung eher negativ aus. Die Zuckerwerte liegen um 21 % unter den Gehalten nach Pilzbiomasse-Düngung. Ähnlich gute Werte wie nach Anwendung des Pilzbiomasse-Düngers wären nur durch eine Aufteilung der Düngermenge auf mehrere Gaben möglich. Kurzzeitige Nährstoffstöße sind aber auch dann nicht zu vermeiden.

Die Unterschiede sind umso bedeutsamer, als mit dem Mineraldünger 117 kg N/ha und durch den organischen Dünger nur 36 kg N/ha ausgebracht wurden. Auch die Chlorosehäufigkeit wird im zweiten Jahr bereits günstig beeinflußt, mit 6,1 % liegt der Wert deutlich unter den Vergleichswerten der übrigen Varianten.

## Ansprüche

1. Verfahren zur Düngung von Weinkulturen, dadurch gekennzeichnet, dass man einen Dünger aus Pilzbiomasse, beispielsweise Mycel von Penicillium chrysogenum, verwendet.

2. Verfahren nach Anspruch 1, dadurch gekennzeichnet, dass der Dünger zu 85 bis 95 Gewichts % aus getrocknetem Pilzmycel und zu 5 bis 15 Gewichts % aus Kalimagnesia besteht.

3. Verfahren nach Ansprüchen 1 und 2, dadurch gekennzeichnet, dass die Aufwandsmengen zwischen 300 kg und 1000 kg Dünger pro Hektar und Jahr liegen.